# FASCICULE DE BREVET EUROPEEN

(11) **EP 3 838 790 B1**
(45) Date de publication et mention de la délivrance du brevet: **12.07.2023**
(21) Numéro de dépôt: 20210315.6
(22) Date de dépôt: 27.11.2020
(51) Int. Cl.: B65D 55/16

(54) **DISPOSITIF DE BOUCHAGE À VIS DESTINÉ À RESTER ATTACHÉ À UN RÉCIPIENT APRÈS OUVERTURE DU RÉCIPIENT**
SCHRAUBVERSCHLUSS, DER NACH ÖFFNUNG DES BEHÄLTERS AN DIESEM BEFESTIGT BLEIBT
SCREW CAP DEVICE INTENDED TO REMAIN ATTACHED TO A CONTAINER AFTER OPENING OF THE CONTAINER

(30) Priorité: 04.12.2019 FR 1913760
(43) Date de publication de la demande: 23.06.2021
(73) Titulaire: Société Lorraine de Capsules Metalliques - Manufacture de Bouchage, 88140 Contrexeville (FR)
(72) Inventeur: Mélan-Moutet, Mathias, 51100 REIMS (FR)
(74) Mandataire: Gevers & Orès

(56) Documents cités:
- CN-A- 102 700 822
- US-A- 5 215 204
- US-A- 5 246 125
- US-A1- 2019 344 944

## Description

### DOMAINE TECHNIQUE

La présente invention concerne un dispositif de bouchage destiné à fermer (ou obturer) le col d'un récipient et à rester attaché au récipient après ouverture du col.

### ÉTAT DE LA TECHNIQUE

Pour des raisons écologiques, dans la plupart des pays, de nouvelles réglementations imposent ou vont imposer que le dispositif de bouchage d'un récipient, tel qu'une bouteille, reste totalement attaché au récipient, même lorsque le dispositif de bouchage laisse le col du récipient ouvert.

Il existe déjà des récipients fermés avec un dispositif de bouchage à vis mais le plus souvent, ces dispositifs ne sont pas attachés à leur récipient lorsque le col du récipient est ouvert. Par conséquent, pour se conformer aux nouvelles réglementations, les lignes d'embouteillage qui sont configurées pour monter ces dispositifs de bouchage à vis sur leurs récipients nécessitent une adaptation parfois complexe et coûteuse pour adapter la ligne d'embouteillage afin que ces dispositifs de bouchage soient attachés à leur récipient.

Les documents US 5 215 204 et US 2019/344944 décrivent chacun un exemple de bouchon à vis attaché à son récipient, le bouchon du premier présentant les caractéristiques techniques listées dans le préambule de la présente revendication 1.

### EXPOSÉ DE L'INVENTION

La présente invention a pour objet de pallier ces inconvénients en proposant un dispositif de bouchage à vis destiné à rester attacher au récipient qui ne demande pas d'adaptation des chaînes de montage.

À cet effet, l'invention concerne un dispositif de bouchage à vis destiné à rester attaché à un récipient après ouverture du récipient.

Selon l'invention, le dispositif de bouchage comprend une paroi cylindrique présentant un axe longitudinal, une extrémité fermée par un fond et une extrémité ouverte, la paroi cylindrique comprenant un premier tronçon comprenant l'extrémité fermée et un deuxième tronçon comprenant l'extrémité ouverte, le deuxième tronçon prolongeant le premier tronçon selon l'axe longitudinal, le premier tronçon présentant une surface interne comportant un filetage agencé pour coopérer avec un filetage agencé sur un col du récipient, le premier tronçon étant configuré pour se trouver alternativement dans une position fermée dans laquelle le premier tronçon est vissé sur le col et une position ouverte dans laquelle le premier tronçon est dévissé du col et le col est ouvert, le deuxième tronçon présentant une surface interne comportant un élément circulaire en saillie agencé pour coopérer avec un élément de retenue agencé sur le récipient pour retenir le deuxième tronçon au récipient, le premier tronçon étant relié au deuxième tronçon par une jonction circonférentielle comprise dans un plan perpendiculaire à l'axe longitudinal, la jonction circonférentielle comportant une connexion non fracturable s'étendant symétriquement sur une première distance prédéterminée de part et d'autre d'une génératrice de la paroi cylindrique et une première connexion fracturable complétant la jonction circonférentielle, le deuxième tronçon comprenant en outre une deuxième connexion fracturable s'étendant parallèlement à la jonction circonférentielle, la deuxième connexion fracturable s'étendant symétriquement sur une deuxième distance prédéterminée de part et d'autre de la génératrice de la paroi cylindrique, la deuxième distance prédéterminée étant supérieure à la première distance prédéterminée, la première connexion fracturable et la deuxième connexion fracturable étant aptes à se fracturer lors d'un premier dévissage du premier tronçon.

Ainsi, grâce à la fracturation des connexions fracturables lors de la première ouverture, des bras sont formés permettant de retenir le premier tronçon au deuxième tronçon. Le deuxième tronçon étant retenu au récipient par la coopération de l'élément circulaire en saillie et l'élément de retenue, le premier tronçon reste attaché au récipient.

En outre, la deuxième connexion fracturable présente une partie de forme arrondie en regard de la connexion non fracturable, la partie de forme arrondie présentant un sommet opposé à la jonction circonférentielle.

De plus, le sommet de la partie de forme arrondie peut être compris par la génératrice de la paroi cylindrique.

Selon une particularité, l'élément circulaire en saillie comprend une pluralité de pièces réparties séparées les unes des autres dans un plan perpendiculaire à l'axe longitudinal.

En outre, les pièces peuvent comprendre chacune une rampe d'accrochage soutenue par au moins un gousset.

Selon une autre particularité, le dispositif de bouchage peut comprendre un joint d'étanchéité recouvrant le fond de l'extrémité fermée de la paroi cylindrique, le joint d'étanchéité étant agencé pour entrer en contact avec une extrémité libre du col du récipient lorsque le premier tronçon est dans la position fermée.

Avantageusement, le dispositif de bouchage peut comprendre des ergots agencés pour retenir le joint d'étanchéité contre le fond lorsque l'extrémité libre du col n'est pas en contact avec le joint d'étanchéité.

L'invention concerne aussi un procédé de fabrication d'un dispositif de bouchage.

Selon l'invention, le procédé comprend les étapes suivantes :
- une étape de moulage d'une paroi cylindrique présentant un axe longitudinal, une extrémité fermée par un fond et une extrémité ouverte, la paroi cylindrique comprenant un premier tronçon comprenant l'extrémité fermée et un deuxième tronçon comprenant l'extrémité ouverte, le deuxième tronçon prolongeant le premier tronçon selon l'axe longitudinal, le premier tronçon présentant une surface interne comportant un filetage agencé pour coopérer avec un filetage agencé sur un col du récipient, le premier tronçon étant configuré pour se trouver alternativement dans une position fermée dans laquelle le premier tronçon est vissé sur le col et une position ouverte dans laquelle le premier tronçon est dévissé du col et le col est ouvert, le deuxième tronçon présentant une surface interne comportant un élément circulaire en saillie agencé pour coopérer avec un élément de retenue agencé sur le récipient pour retenir le deuxième tronçon au récipient,
- une étape de découpe d'une première connexion fracturable et d'une deuxième connexion fracturable de façon :
   que le premier tronçon soit relié au deuxième tronçon par une jonction circonférentielle comprise dans un plan perpendiculaire à l'axe longitudinal, la jonction circonférentielle comportant une connexion non fracturable s'étendant symétriquement sur une première distance prédéterminée de part et d'autre d'une génératrice de la paroi cylindrique et la première connexion fracturable complétant la jonction circonférentielle,
   et que le deuxième tronçon comprenne la deuxième connexion fracturable s'étendant parallèlement à la jonction circonférentielle, la deuxième connexion fracturable s'étendant symétriquement sur une deuxième distance prédéterminée de part et d'autre de la génératrice de la paroi cylindrique, la deuxième distance prédéterminée étant supérieure à la première distance prédéterminée, la première connexion fracturable et la deuxième connexion fracturable étant aptes à se fracturer lors d'un premier dévissage du premier tronçon du col du récipient, la deuxième connexion fracturable présentant une partie de forme arrondie en regard de la connexion non fracturable, la partie de forme arrondie présentant un sommet opposé à la jonction circonférentielle.

En outre, l'étape de découpe peut comporter la découpe de la première connexion fracturable et de la deuxième connexion fracturable par un dispositif à deux lames, chacune des lames correspondant une lame à trois dimensions.

Par ailleurs, l'étape de découpe peut être précédée d'une étape d'insertion du joint d'étanchéité de façon qu'il recouvre le fond de l'extrémité fermée de la paroi cylindrique, le joint d'étanchéité étant inséré pour pouvoir entrer en contact avec l'extrémité libre du col du récipient lorsque le premier tronçon est dans la position fermée.

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente une vue en coupe longitudinale du dispositif de bouchage dans la position fermée,
- la figure 2 représente une vue en perspective du dispositif de bouchage,
- la figure 3 représente une vue du dispositif de bouchage dont la paroi cylindrique a été déroulée,
- la figure 4 représente une coupe longitudinale du dispositif de bouchage au niveau de l'élément circulaire en saillie,
- la figure 5 représente une vue en perspective d'un récipient équipé d'un dispositif de bouchage,
- la figure 6 représente une vue en perspective du dispositif de bouchage en position fermée, monté sur un récipient,
- la figure 7 représente une vue en perspective du dispositif de bouchage en position ouverte, monté sur un récipient.

### DESCRIPTION DÉTAILLÉE

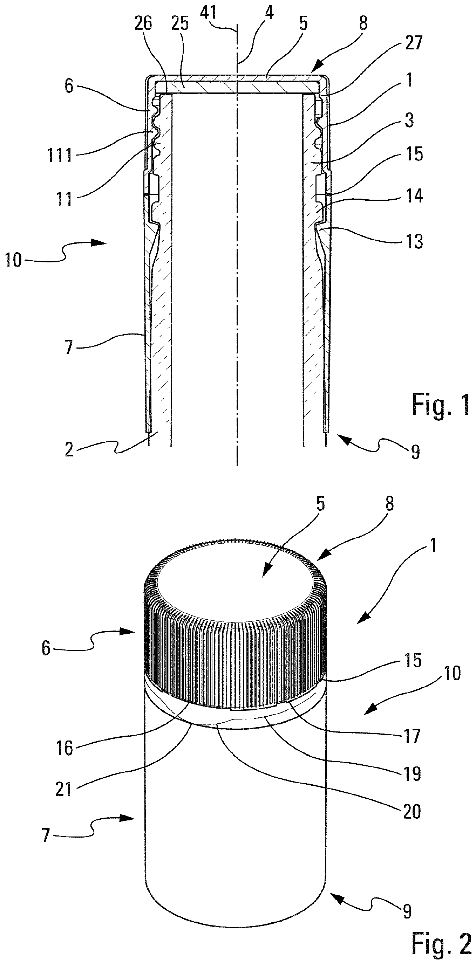

La figure 1 représente le dispositif de bouchage 1 à vis destiné à rester attaché à un récipient 2, tel qu'une bouteille, après ouverture du récipient 2.

Le récipient 2 comporte un col 3. Le col 3 est soit venu de matière avec le reste du récipient 2, notamment lorsque le récipient 2 est une bouteille en verre ou en matière plastique, soit adapté pour être solidarisé à demeure sur une paroi du récipient 2, au niveau d'une ouverture traversant cette paroi. Le col 3 peut présenter une forme globalement tubulaire présentant un axe longitudinal central 41 du col 3.

Le dispositif de bouchage 1 comprend une paroi cylindrique 10 présentant un axe longitudinal 4. La paroi cylindrique possède un fond 5, une extrémité fermée 8 par le fond 5 et une extrémité ouverte 9.

La paroi cylindrique 10 comprend un tronçon 6 comprenant l'extrémité fermée 8 et un tronçon 7 comprenant l'extrémité ouverte 9. Le tronçon 7 prolonge le tronçon 6 selon l'axe longitudinal 4.

Le tronçon 6 présente une surface interne comportant un filetage 111 agencé pour coopérer avec un filetage 11 agencé sur le col 3 du récipient 2.

Le tronçon 6 est configuré pour se trouver alternativement dans une position fermée dans laquelle le tronçon 6 est vissé sur le col 3 et une position ouverte dans laquelle le tronçon 6 est dévissé du col 3 et le col 3 est ouvert. Dans la position fermée, l'axe longitudinal central 41 du col 3 est sensiblement confondu avec l'axe longitudinal 4.

Le tronçon 7 présente une surface interne 12 comportant un élément circulaire 13 en saillie agencé pour coopérer avec un élément de retenue 14 agencé sur le récipient 2 (par exemple, sur le col 3) pour retenir le tronçon 7 au récipient 2.

Le tronçon 6 est relié au tronçon 7 par une jonction circonférentielle 15 comprise dans un plan perpendiculaire à l'axe longitudinal 4. La jonction circonférentielle 15 comporte une connexion non fracturable 16 s'étendant symétriquement sur une distance d1 prédéterminée de part et d'autre d'une génératrice 18 de la paroi cylindrique 10 et une connexion fracturable 17 complétant la jonction circonférentielle 15. Ainsi, la connexion non fracturable 16 et la connexion fracturable 17 forment la jonction circonférentielle 15.

Une génératrice d'une surface cylindrique correspond à une droite qui se déplace dans l'espace le long d'un cercle, selon une direction constante. La génératrice 18 correspond à cette droite à un endroit donné de la paroi cylindrique 10.

Le tronçon 7 comprend en outre une connexion fracturable 19 s'étendant parallèlement à la jonction circonférentielle 15. La connexion fracturable 19 s'étend symétriquement sur une distance d2 prédéterminée de part et d'autre de la génératrice 18 de la paroi cylindrique 10. La distance d2 prédéterminée est avantageusement supérieure à la distance d1 prédéterminée.

Les connexions fracturables 17 et 19 peuvent prendre des formes de réalisation diverses. Par exemple, elles peuvent inclure une succession de pontets frangibles qui sont répartis régulièrement. Ces pontets peuvent être obtenus par moulage ou par découpage.

De façon non limitative, la distance d1 est comprise entre le dixième de la longueur du diamètre de la paroi cylindrique 10 et la moitié de la longueur du diamètre de la paroi cylindrique 10. La distance d2 est comprise entre la moitié de la longueur du diamètre de la paroi cylindrique 10 et la longueur du diamètre de la paroi cylindrique 10.

La connexion fracturable 17 et la connexion fracturable 19 sont aptes à se fracturer lors d'un premier dévissage du tronçon 6 en vue de l'ouverture du récipient 2.

Lorsque les connexions fracturables 17 et 19 sont fracturées, les parties de la paroi cylindrique 10 entre les connexions fracturables 17 et 19 forment des bras 28 qui s'étendent à partie de la génératrice 18. Ces bras retiennent le tronçon 6 au tronçon 7 qui est retenu au col 3 du récipient 2 par la coopération de l'élément circulaire 13 et l'élément de retenu 14. Chacun des bras 28 est dimensionné pour fournir une souplesse permettant au tronçon 6 de pouvoir se déplacer en translation le long de l'axe longitudinal 4 lors du dévissage du tronçon 6 jusqu'à ce que le tronçon 6 soit complètement dévissé. Par ailleurs, les bras 28 sont dimensionnés pour résister à une force de traction maximale suffisante pour empêcher l'arrachement du tronçon 6 du tronçon 7. La force de traction peut être définie en fonction d'une utilisation normale du dispositif de bouchage 1. La force de traction maximale peut être définie en fonction de normes fixées pour l'ouverture d'un dispositif de bouchage 1. De façon non limitative, les bras 28 sont dimensionnés pour que la force de traction maximale soit sensiblement égale à 35 N.

La connexion fracturable 19 présente une partie 20 de forme arrondie (ou en forme de sourire) en regard de la connexion non fracturable 16. La partie 20 de forme arrondie présentant un sommet 21 opposé à la jonction circonférentielle 15.

Cette partie 20 de forme arrondie permet de bloquer la rotation du dispositif de bouchage 1 autour du col 3 par l'appui de cette partie 19 contre le col 3 du récipient 2.

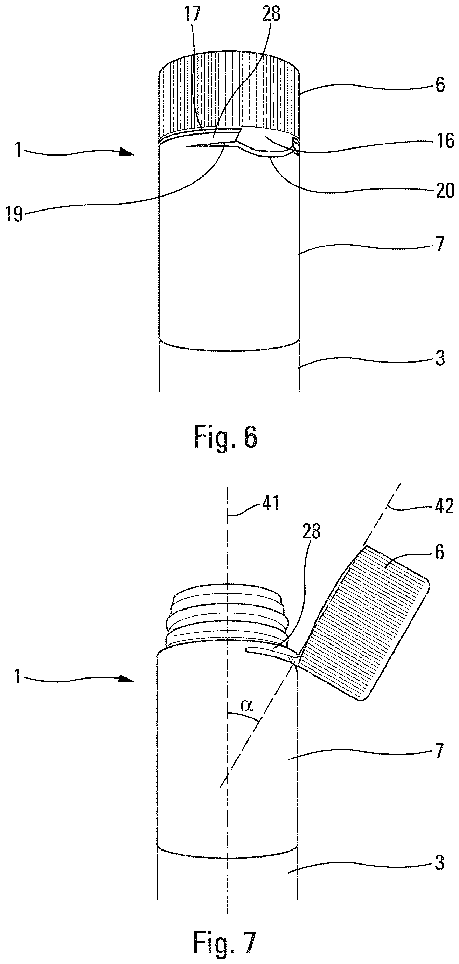

De plus, la partie 20 de forme arrondie permet aussi de bloquer le dispositif de bouchage 6 de façon qu'un plan 42 du tronçon 6 perpendiculaire à l'axe longitudinal 4 fasse un angle d'inclinaison α non nul avec l'axe longitudinal central 41 du col 3 (figure 7). De façon non limitative, l'angle d'inclinaison α est compris entre 20° et 90°, de préférence 45°.

Le sommet 21 de la partie 20 de forme arrondie est compris par la génératrice 18 de la paroi cylindrique 10 à partir de laquelle la connexion non fracturable 16 et la connexion fracturable 19 s'étendent.

De façon non limitative, la distance h entre le sommet 21 et la jonction circonférientielle 15 correspond sensiblement au huitième du diamètre de la paroi cylindrique 10 avec une tolérance de 5%, par exemple.

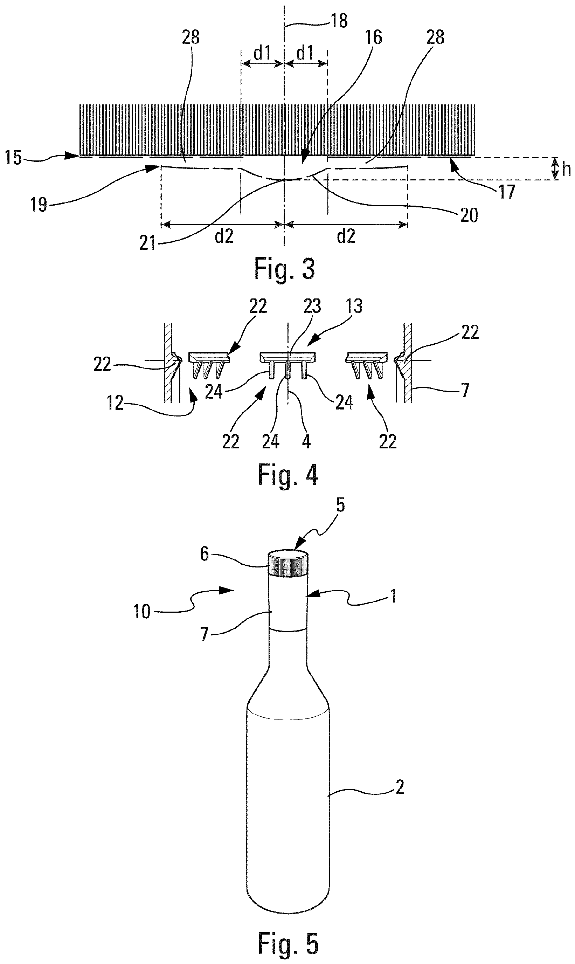

Comme représenté sur la figure 3, la partie 20 de forme arrondie peut présenter un axe de symétrie confondu avec la génératrice 18.

Par ailleurs, l'élément circulaire 13 en saillie peut comprendre une pluralité de pièces 22 réparties séparées les unes des autres dans un plan perpendiculaire à l'axe longitudinal 4.

Selon une configuration, les pièces 22 comprennent chacune une rampe d'accrochage 23 soutenue par au moins un gousset 24. Cette configuration de pièces 22 permet de limiter les défauts de retassure lors du moulage du dispositif de bouchage 1.

Le dispositif de bouchage 1 peut également comprendre un joint d'étanchéité 25 recouvrant le fond 5 de l'extrémité fermée 8 de la paroi cylindrique 10. Le joint 25 est agencé pour entrer en contact avec une extrémité libre 26 du col 3 du récipient 2 lorsque le tronçon 6 est dans la position fermée.

Avantageusement, le dispositif de bouchage 1 comprend des ergots 27 agencés pour retenir le joint d'étanchéité 25 contre le fond 5 lorsque l'extrémité libre 26 du col 3 n'est pas en contact avec le joint d'étanchéité 25.

Les ergots 27 sont répartis sur la surface interne du tronçon 6.

L'invention concerne également un procédé de fabrication du dispositif de bouchage 1.

Le procédé comprend une étape de moulage de la paroi cylindrique 10 et une étape de découpe de la connexion fracturable 17 et de la connexion fracturable 19.

L'étape de découpe peut comporter la découpe de la connexion fracturable 17 et de la connexion fracturable 19 par un dispositif à deux lames, chacune des lames correspondant une lame à trois dimensions.

Le dispositif de bouchage 1 peut également être fabriqué par un dispositif d'impression en trois dimensions.

Par ailleurs, le procédé peut comprendre une étape d'insertion du joint d'étanchéité 25 précédant l'étape de découpe. Le joint d'étanchéité est inséré de façon que ledit joint d'étanchéité 25 recouvre le fond 5 de l'extrémité fermée 8 de la paroi cylindrique 10. Le joint d'étanchéité 25 est inséré de façon qu'il puisse entrer en contact avec l'extrémité libre 26 du col 3 du récipient 2 lorsque le premier tronçon 6 est dans la position fermée.

## Revendications

1. Dispositif de bouchage à vis destiné à rester attaché à un récipient (2) après ouverture du récipient (2), comprenant une paroi cylindrique (10) présentant un axe longitudinal (4), une extrémité fermée (8) par un fond (5) et une extrémité ouverte (9),
la paroi cylindrique (10) comprenant un premier tronçon (6) comprenant l'extrémité fermée (8) et un deuxième tronçon (7) comprenant l'extrémité ouverte (9), le deuxième tronçon (7) prolongeant le premier tronçon (6) selon l'axe longitudinal (4),
le premier tronçon (6) présentant une surface interne comportant un filetage (111) agencé pour coopérer avec un filetage (11) agencé sur un col (3) du récipient (2), le premier tronçon (6) étant configuré pour se trouver alternativement dans une position fermée dans laquelle le premier tronçon (6) est vissé sur le col (3) et une position ouverte dans laquelle le premier tronçon (6) est dévissé du col (3) et le col (3) est ouvert,
le deuxième tronçon (7) présentant une surface interne (12) comportant un élément circulaire (13) en saillie agencé pour coopérer avec un élément de retenue (14) agencé sur le récipient (2) pour retenir le deuxième tronçon (7) au récipient (2),
le premier tronçon (6) étant relié au deuxième tronçon (7) par une jonction circonférentielle (15) comprise dans un plan perpendiculaire à l'axe longitudinal (4), la jonction circonférentielle (15) comportant une connexion non fracturable (16) s'étendant symétriquement sur une première distance (d1) prédéterminée de part et d'autre d'une génératrice (18) de la paroi cylindrique (10) et une première connexion fracturable (17) complétant la jonction circonférentielle (15),
le deuxième tronçon (7) comprenant en outre une deuxième connexion fracturable (19) s'étendant parallèlement à la jonction circonférentielle (15), la deuxième connexion fracturable (19) s'étendant symétriquement sur une deuxième distance (d2) prédéterminée de part et d'autre de la génératrice (18) de la paroi cylindrique (10), la deuxième distance (d2) prédéterminée étant supérieure à la première distance (d1) prédéterminée,
la première connexion fracturable (17) et la deuxième connexion fracturable (19) étant aptes à se fracturer lors d'un premier dévissage du premier tronçon (6), **caractérisé en ce que**
la deuxième connexion fracturable (19) présente une partie (20) de forme arrondie en regard de la connexion non fracturable (16), la partie (20) de forme arrondie présentant un sommet (21) opposé à la jonction circonférentielle (15).

2. Dispositif selon la revendication 1,
**caractérisé en ce que** le sommet (21) de la partie (20) de forme arrondie est compris par la génératrice (18) de la paroi cylindrique (10).

3. Dispositif selon l'une quelconque des revendications 1 à 2,
**caractérisé en ce que** l'élément circulaire (13) en saillie comprend une pluralité de pièces (22) réparties séparées les unes des autres dans un plan perpendiculaire à l'axe longitudinal (4).

4. Dispositif selon la revendication 3,
**caractérisé en ce que** les pièces (22) comprennent chacune une rampe d'accrochage (23) soutenue par au moins un gousset (24).

5. Dispositif selon l'une quelconque des revendications 1 à 4,
**caractérisé en ce qu'**il comprend en outre un joint d'étanchéité (25) recouvrant le fond (5) de l'extrémité fermée (8) de la paroi cylindrique (10), le joint d'étanchéité (25) étant agencé pour entrer en contact avec une extrémité libre (26) du col (3) du récipient (2) lorsque le premier tronçon (6) est dans la position fermée.

6. Dispositif selon la revendication 5,
**caractérisé en ce qu'**il comprend des ergots (27) agencés pour retenir le joint d'étanchéité (25) contre le fond (5) lorsque l'extrémité libre (26) du col (3) n'est pas en contact avec le joint d'étanchéité (25).

7. Procédé de fabrication d'un dispositif de bouchage,
comprenant les étapes suivantes :
- une étape de moulage d'une paroi cylindrique (10) présentant un axe longitudinal (4), une extrémité fermée (8) par un fond (5) et une extrémité ouverte (9), la paroi cylindrique (10) comprenant un premier tronçon (6) comprenant l'extrémité fermée (8) et un deuxième tronçon (7) comprenant l'extrémité ouverte (9), le deuxième tronçon (7) prolongeant le premier tronçon (6) selon l'axe longitudinal (4), le premier tronçon (6) présentant une surface interne comportant un filetage (111) agencé pour coopérer avec un filetage (11) agencé sur un col (3) du récipient (2), le premier tronçon (6) étant configuré pour se trouver alternativement dans une position fermée dans laquelle le premier tronçon (6) est vissé sur le col (3) et une position ouverte dans laquelle le premier tronçon (6) est dévissé du col (3) et le col est ouvert (3), le deuxième tronçon (7) présentant une surface interne (12) comportant un élément circulaire (13) en saillie agencé pour coopérer avec un élément de retenue (14) agencé sur le récipient (2) pour retenir le deuxième tronçon (7) au récipient (2),
- une étape de découpe d'une première connexion fracturable (17) et d'une deuxième connexion fracturable (19) de façon :
que le premier tronçon (6) soit relié au deuxième tronçon (7) par une jonction circonférentielle (15) comprise dans un plan perpendiculaire à l'axe longitudinal (4), la jonction circonférentielle (15) comportant une connexion non fracturable (16) s'étendant symétriquement sur une première distance (d1) prédéterminée de part et d'autre d'une génératrice (18) de la paroi cylindrique (10) et la première connexion fracturable (17) complétant la jonction circonférentielle (15),
et que le deuxième tronçon (7) comprenne la deuxième connexion fracturable (19) s'étendant parallèlement à la jonction circonférentielle (15),
la deuxième connexion fracturable (19) s'étendant symétriquement sur une deuxième distance (d2) prédéterminée de part et d'autre de la génératrice (18) de la paroi cylindrique (10), la deuxième distance (d2) prédéterminée étant supérieure à la première distance (d1) prédéterminée, la première connexion fracturable (17) et la deuxième connexion fracturable (19) étant aptes à se fracturer lors d'un premier dévissage du premier tronçon (6) du col (3) du récipient (2), **caractérisé en ce que** la deuxième connexion fracturable (19) présente une partie (20) de forme arrondie en regard de la connexion non fracturable (16), la partie (20) de forme arrondie présentant un sommet (21) opposé à la jonction circonférentielle (15).

8. Procédé selon la revendication 7,
**caractérisé en ce que** l'étape de découpe comporte la découpe de la première connexion fracturable (17) et de la deuxième connexion fracturable (19) par un dispositif à deux lames, chacune des lames correspondant à une lame à trois dimensions.

9. Procédé selon l'une quelconque des revendications 7 ou 8, **caractérisé en ce que** l'étape de découpe est précédée d'une étape d'insertion du joint d'étanchéité (25) de façon qu'il recouvre le fond (5) de l'extrémité fermée (8) de la paroi cylindrique (10), le joint d'étanchéité (25) étant inséré pour pouvoir entrer en contact avec l'extrémité libre (26) du col (3) du récipient (2) lorsque le premier tronçon (6) est dans la position fermée.

## Patentansprüche

1. Schraubverschlussvorrichtung, die dazu bestimmt ist, an einem Behälter (2) nach dem Öffnen des Behälters (2) befestigt zu bleiben,
umfassend eine zylindrische Wand (10), die eine Längsachse (4), ein von einem Boden (5) geschlossenes Ende (8) und ein offenes Ende (9),
wobei die zylindrische Wand (10) einen ersten Abschnitt (6), der das geschlossene Ende (8) umfasst, und einen zweiten Abschnitt (7) umfasst, der das offene Ende (9) umfasst, wobei der zweite Abschnitt (7) den ersten Abschnitt (6) entlang der Längsachse (4) verlängert,
wobei der erste Abschnitt (6) eine Innenoberfläche, die ein Gewinde (111) aufweist, das dazu eingerichtet ist, mit einem Gewinde (11), das auf einem Hals (3) des Behälters(2) eingerichtet ist, zusammenzuwirken, wobei der erste Abschnitt (6) dazu konfiguriert ist, sich abwechselnd in einer geschlossenen Position, in der der erste Abschnitt (6) auf den Hals (3) geschraubt ist, und einer offenen Position, in der der erste Abschnitt (6) von dem Hals (3) abgeschraubt ist und der Hals (3) offen ist, zu befinden,
wobei der zweite Abschnitt (7) eine Innenoberfläche (12) aufweist, die ein vorstehendes kreisförmiges Element (13) aufweist, das dazu eingerichtet ist, mit einem Halteelement (14) zusammenzuwirken, das auf dem Behälter (2) dazu eingerichtet ist, den zweiten Abschnitt (7) an dem Behälter (2) zu halten,
wobei der erste Abschnitt (6) mit dem zweiten Abschnitt (7) durch eine umlaufende Verbindungsstelle (15) verbunden ist, die in einer Ebene senkrecht zur Längsachse (4) liegt, wobei die umlaufende Verbindungsstelle (15) eine nicht brechbare Verbindung (16) aufweist, die sich symmetrisch über einen ersten vorbestimmten Abstand (d1) auf beiden Seiten einer Mantellinie (18) der zylindrischen Wand (10) erstreckt, und eine erste brechbare Verbindung (17), die die umlaufende Verbindungsstelle (15) vervollständigt,
wobei der zweite Abschnitt (7) weiter eine zweite brechbare Verbindung (19) umfasst, die sich parallel zu der umlaufenden Verbindungsstelle (15) erstreckt, wobei sich die zweite brechbare Verbindung (19) symmetrisch über einen zweiten vorbestimmten Abstand (d2) auf beiden Seiten der Mantellinie (18) der zylindrischen Wand (10) erstreckt, wobei der zweite vorbestimmte Abstand (d2) größer als der erste vorbestimmte Abstand (d1) ist,
wobei die erste brechbare Verbindung (17) und die zweite brechbare Verbindung (19) in der Lage sind, bei einem ersten Abschrauben des ersten Abschnitts (6) zu brechen, **dadurch gekennzeichnet, dass** die zweite brechbare Verbindung (19) einen Teil (20) mit abgerundeter Form gegenüber der nicht brechbaren Verbindung (16) aufweist, wobei der Teil (20) mit abgerundeter Form eine Spitze (21) aufweist, die der umlaufenden Verbindungsstelle (15) gegenüberliegt.

2. Vorrichtung nach Anspruch 1,
**dadurch gekennzeichnet, dass** die Spitze (21) des Teils (20) mit abgerundeter Form von der Mantellinie (18) der zylindrischen Wand (10) umfasst wird.

3. Vorrichtung nach einem der Ansprüche 1 bis 2,
**dadurch gekennzeichnet, dass** das vorstehende kreisförmige Element (13) eine Vielzahl von Stücken (22) umfasst, die in einer Ebene senkrecht zur Längsachse (4) voneinander getrennt verteilt sind.

4. Vorrichtung nach Anspruch 3,
**dadurch gekennzeichnet, dass** die Stücke (22) jeweils eine Einrastrampe (23) umfassen, die von mindestens einem Keil (24) gestützt wird.

5. Vorrichtung nach einem der Ansprüche 1 bis 4,
**dadurch gekennzeichnet, dass** sie weiter eine Dichtung (25) umfasst, die den Boden (5) des geschlossenen Endes (8) der zylindrischen Wand (10) bedeckt, wobei die Dichtung (25) dazu eingerichtet ist, mit einem freien Ende (26) des Halses (3) des Behälters (2) in Kontakt zu kommen, wenn sich der erste Abschnitt (6) in der geschlossenen Position befindet.

6. Vorrichtung nach Anspruch 5,
**dadurch gekennzeichnet, dass** sie Zapfen (27) umfasst, die dazu eingerichtet sind, die Dichtung (25) gegen den Boden (5) zu halten, wenn das freie Ende (26) des Halses (3) nicht in Kontakt mit der Dichtung (25) ist.

7. Verfahren zur Herstellung einer Verschlussvorrichtung,
umfassend die folgenden Schritte:
- einen Schritt des Formens einer zylindrischen Wand (10), die eine Längsachse (4), ein durch einen Boden (5) geschlossenes Ende (8) und ein offenes Ende (9) aufweist, wobei die zylindrische Wand (10) einen ersten Abschnitt (6), der das geschlossene Ende (8) umfasst, und einen zweiten Abschnitt (7) umfasst, der das offene Ende (9) umfasst, wobei der zweite Abschnitt (7) den ersten Abschnitt (6) entlang der Längsachse (4) verlängert, wobei der erste Abschnitt (6) eine Innenoberfläche aufweist, die ein Gewinde (111) aufweist, das dazu eingerichtet ist, mit einem Gewinde (11) zusammenzuwirken, das auf einem Hals (3) des Behälters (2) eingerichtet ist, wobei der erste Abschnitt (6) dazu konfiguriert ist, sich abwechselnd in einer geschlossenen Position, in der der erste Abschnitt (6) auf den Hals (3) geschraubt ist, und einer offenen Position, in der der erste Abschnitt (6) von dem Hals (3) abgeschraubt und der Hals (3) geöffnet ist, zu befinden, wobei der zweite Abschnitt (7) eine Innenoberfläche (12) aufweist, die ein vorstehendes kreisförmiges Element (13) aufweist, das dazu eingerichtet ist, mit einem Halteelement (14) zusammenzuwirken, das auf dem Behälter (2) eingerichtet ist, um den zweiten Abschnitt (7) an dem Behälter (2) zu halten,
- einen Schritt des Ausschneidens einer ersten brechbaren Verbindung (17) und einer zweiten brechbaren Verbindung (19) derart,:
dass der erste Abschnitt (6) mit dem zweiten Abschnitt (7) durch eine umlaufende Verbindungsstelle (15) verbunden ist, die in einer Ebene senkrecht zur Längsachse (4) liegt, wobei die umlaufende Verbindungsstelle (15) eine nicht brechbare Verbindung (16) aufweist, die sich symmetrisch über einen ersten vorbestimmten Abstand (d1) auf beiden Seiten einer Mantellinie (18) der zylindrischen Wand (10) erstreckt, und wobei die erste brechbare Verbindung (17) die umlaufende Verbindungsstelle (15) vervollständigt,
und dass der zweite Abschnitt (7) die zweite brechbare Verbindung (19) umfasst, die sich parallel zu der umlaufenden Verbindungsstelle (15) erstreckt,
wobei sich die zweite brechbare Verbindung (19) symmetrisch über einen zweiten vorbestimmten Abstand (d2) auf beiden Seiten der Mantellinie (18) der zylindrischen Wand (10) erstreckt, wobei der zweite vorbestimmte Abstand (d2) größer ist als der erste vorbestimmte Abstand (d1), wobei die erste brechbare Verbindung (17) und die zweite brechbare Verbindung (19) in der Lage sind, bei einem ersten Abschrauben des ersten Abschnitts (6) des Halses (3) des Behälters (2) zu brechen, **dadurch gekennzeichnet, dass** die zweite brechbare Verbindung (19) einen Teil (20) mit abgerundeter Form gegenüber der nicht brechbaren Verbindung (16) aufweist, wobei der Teil (20) mit abgerundeter Form eine Spitze (21) aufweist, die der umlaufenden Verbindungsstelle (15) entgegengesetzt ist.

8. Verfahren nach Anspruch 7,
**dadurch gekennzeichnet, dass** der Ausschneideschritt das Ausschneiden der ersten brechbaren Verbindung (17) und der zweiten brechbaren Verbindung (19) durch eine Vorrichtung mit zwei Klingen aufweist, wobei jede der Klingen einer dreidimensionalen Klinge entspricht.

9. Verfahren nach einem der Ansprüche 7 oder 8,
**dadurch gekennzeichnet, dass** dem Ausschneideschritt ein Schritt des Einsetzens der Dichtung (25) vorausgeht, derart, dass sie den Boden (5) des geschlossenen Endes (8) der zylindrischen Wand (10) bedeckt, wobei die Dichtung (25) eingesetzt wird, um mit dem freien Ende (26) des Halses (3) des Behälters (2) in Kontakt kommen zu können, wenn sich der erste Abschnitt (6) in der geschlossenen Position befindet.

## Claims

1. Screw capping device intended to remain tethered to a container (2) after opening of the container (2),
comprising a cylindrical wall (10) having a longitudinal axis (4), an end closed (8) by a bottom (5) and an open end (9),
the cylindrical wall (10) comprising a first section (6) comprising the closed end (8) and a second section (7) comprising the open end (9), the second section (7) extending the first section (6) according to the longitudinal axis (4),
the first section (6) having an inner surface comprising a threading (111) arranged to co-operate with a threading (11) arranged on a neck (3) of the container (2), the first section (6) being configured to be alternatively in a closed position wherein the first section (6) is screwed on the neck (3) and an open position, wherein the first section (6) is unscrewed from the neck (3) and the neck (3) is open,
the second section (7) having an inner surface (12) comprising a projecting circular element (13) arranged to co-operate with a retaining element (14) arranged on the container (2) to retain the second section (7) to the container (2),
the first section (6) being connected to the second section (7) by a circumferential junction (15) comprised in a plane perpendicular to the longitudinal axis (4), the circumferential junction (15) comprising a non-breakable connection (16) extending symmetrically over a first predetermined distance (d1) on either side of a generator (18) of the cylindrical wall (10) and a first breakable connection (17) completing the circumferential junction (15),
the second section (7) further comprising a second breakable connection (19) extending parallel to the circumferential junction (15), the second breakable connection (19) extending symmetrically over a second predetermined distance (d2) on either side of the generator (18) of the cylindrical wall (10), the second predetermined distance (d2) being greater than the first predetermined distance (d1), the first breakable connection (17) and the second breakable connection (19) being able of being broken during a first unscrewing of the first section (6),
**characterized in that** the second breakable connection (19) has a rounded portion (20) facing the non-breakable connection (16), the rounded portion (20) having a peak (21) opposite the circumferential junction (15).

2. Device according to claim 1,
**characterised in that** the peak (21) of the rounded portion (20) is comprised by the generator (18) of the cylindrical wall (10).

3. Device according to any one of claims 1 to 2,
**characterised in that** the projecting circular element (13) comprises a plurality of distributed parts (22) separated from one another in a plane perpendicular to the longitudinal axis (4).

4. Device according to claim 3,
**characterised in that** the parts (22) each comprise a hooking rail (23) supported by at least one gusset (24).

5. Device according to any one of claims 1 to 4,
**characterised in that** it further comprises a seal (25) covering the bottom (5) of the closed end (8) of the cylindrical wall (10), the seal (25) being arranged to come into contact with a free end (26) of the neck (3) of the container (2) when the first section (6) is in the closed position.

6. Device according to claim 5,
**characterised in that** it comprises lugs (27) arranged to retain the seal (25) against the bottom (5) when the free end (26) of the neck (3) is not in contact with the seal (25).

7. Method for manufacturing a capping device,
comprising the following steps:
- a step of moulding a cylindrical wall (10) having a longitudinal axis (4), an end closed (8) by a bottom (5) and an open end (9), the cylindrical wall (10) comprising a first section (6) comprising the closed end (8) and a second section (7) comprising the open end (9), the second section (7) extending the first section (6) according to the longitudinal axis (4), the first section (6) having an inner surface comprising a threading (111) arranged to co-operate with a threading (11) arranged on a neck (3) of the container (2), the first section (6) being configured to be alternatively in a closed position wherein the first section (6) is screwed on the neck (3) and an open position wherein the first section (6) is unscrewed from the neck (3) and the neck is open (3), the second section (7) having an inner surface (12) comprising a projecting circular element (13) arranged to co-operate with a retaining element (14) arranged on the container (2) to retain the second section (7) to the container (2),
- a step of cutting a first breakable connection (17) and a second breakable connection (19) such:
that the first section (6) is connected to the second section (7) by a circumferential junction (15) comprised in a plane perpendicular to the longitudinal axis (4), the circumferential junction (15) comprising a non-breakable connection (16) extending symmetrically over a first predetermined distance (d1) on either side of a generator (18) of the cylindrical wall (10) and the first breakable connection (17) completing the circumferential junction (15),
and that the second section (7) comprises the second breakable connection (19) extending parallel to the circumferential junction (15), the second breakable connection (19) extending symmetrically over a second predetermined distance on either side of the generator of the cylindrical wall, the second predetermined distance (d2) being greater than the first predetermined distance (d1), the first breakable connection (17) and the second breakable connection (19) being able of being broken during a first unscrewing of the first section (6) from the neck (3) of the container (2)
**characterized in that** the second breakable connection (19) has a rounded portion (20) facing the non-breakable connection (16), the rounded portion (20) having a peak (21) opposite the circumferential junction (15).

8. Method according to claim 7,
**characterised in that** the cutting step comprises the cutting of the first breakable connection (17) and of the second breakable connection (19) by a two-blade device, each of the blades corresponding to a three-dimensional blade.

9. Method according to any one of claims 7 or 8,
**characterised in that** the cutting step is preceded by a step of inserting the seal (25) such that it covers the bottom (5) of the closed end (8) of the cylindrical wall (10), the seal (25) being inserted to be able to come into contact with the free end (26) of the neck (3) of the container (2) when the first section (6) is in the closed position
